(19) Europäisches Patentamt / European Patent Office / Office européen des brevets

(11) **EP 3 789 416 A1**

(12) **EUROPEAN PATENT APPLICATION**

(43) Date of publication:
**10.03.2021 Bulletin 2021/10**

(21) Application number: **19382755.7**

(22) Date of filing: **04.09.2019**

(51) Int Cl.:
*C08G 18/04* (2006.01)          *B33Y 70/00* (2020.01)
*B33Y 80/00* (2015.01)          *C08G 18/38* (2006.01)
*C08G 18/67* (2006.01)          *C08G 18/79* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Henkel AG & Co. KGaA
40589 Düsseldorf (DE)**

(72) Inventors:
• **Chou, Kang Wei
08290 Cerdanyola del Vallès (ES)**
• **Zuniga Ruiz, Camilo
08193 Bellaterra, Barcelona (ES)**
• **Belmez Lledo, Alejandro
08291 Ripollet, Bacelona (ES)**

(54) **THIOL/ISOCYANATE/(POLY-)ENE FORMULATIONS FOR ADDITIVE MANUFACTURING**

(57)    The present invention refers to a photo-curable composition comprising at least one polythiol having at least two thiol groups, at least one polyisocyanate having at least two isocyanate groups, at least one (poly-)ene compound having at least one -C=C group, and at least one photolatent base catalyst. Furthermore, the present invention pertains to a method of photo-curing the photo-curable composition according to the present invention as well as to a method of three dimensional printing an object with the photo-curable composition according to the present invention. Moreover, the present invention refers to a cross-linked polymer or a three-dimensional object obtained by the methods according to the present invention, and use of the polymer or the object as an antireflective coating, encapsulant for LEDs, microlense for CMOS image sensors, as optical material, as biomedical functional coating, packaging and textile, stents, scaffolds, dental applications, and as reversible adhesive for debond on demand applications.

**Description**

The present invention refers to a photo-curable composition comprising at least one polythiol having at least two thiol groups, at least one polyisocyanate having at least two isocyanate groups, at least one (poly-)ene compound having at least one -C=C group, and at least one photolatent base catalyst. Furthermore, the present invention pertains to a method of photo-curing the photo-curable composition according to the present invention as well as to a method of three dimensional printing an object with the photo-curable composition according to the present invention. Moreover, the present invention refers to a cross-linked polymer or a three-dimensional object obtained by the methods according to the present invention, and use of the polymer or the object as an antireflective coating, encapsulant for LEDs, microlense for CMOS image sensors, as optical material, as biomedical functional coating, packaging and textile, stents, scaffolds, dental applications, and as reversible adhesive for debond on demand applications.

Additive manufacturing (or three dimensional (3D) printing) is now emerging as an appealing way to produce end-use parts. Although, the technology has been known since the late 80's the amount of materials that can be printed is quite limited. In fact, for light-based 3D printing technologies only acrylate- and epoxy-based resins are available in the market. For that reason, there is a need for new chemistries that can be applicable to light-based 3D printing technologies.

Thiol-based chemistry is in general very interesting in polymer science due to its efficiency and versatility to react with many monomers. Reaction of thiols can proceed under a variety of conditions, being of interest for additive manufacturing by UV light irradiation in the presence of a photolatent base and/or a photoinitiator.

3D printing is continuously growing and expanding with reference to applications and markets. The development of highly functional materials has become essential for optical applications. Precisely, polymeric materials possessing high refractive indices (high-n) and high Abbe's numbers (high-v) have received much attention because of the wide variety of applications such as optical materials including antireflective coatings, encapsulants for LEDs, microlenses for CMOS image sensors, among others. One clear benefit that 3D printing may bring to optical devices is the high degree of customization. Thus, for example, optical devices could be 3D printed in the exact shape as required for the customer, being even more affordable than conventional manufacturing processes.

The object of the present invention was the provision of thiol and isocyanate based compositions which are suitable for stereolithography (SLA) and digital light processing (DLP) 3D printing technologies.

The object is solved by a photo-curable composition comprising at least one polythiol having at least two thiol groups, at least one polyisocyanate having at least two isocyanate groups, at least one (poly-)ene compound having at least one -C=C group, and at least one photolatent base catalyst.

The inventors of the present invention have surprisingly found that the photocurable cross-linked materials described in this invention display good optical properties such as high refractive index, Abbe's number and high transparency which make them suitable for multiple optical applications including for example antireflective coatings, encapsulants for LEDs, microlenses for CMOS image sensors, and as optical materials in many devices. Furthermore, they display a short curing time, long pot-life, and shape memory behavior. Additionally, the photocurable compositions are non-toxic or non-hazardous.

Surprisingly, the cross-linked materials described in this invention display shape memory behavior. Without wishing to be bound by any particular theory, it is assumed that the shape memory behavior is based on the 3D cross-linked polymer network, which acts as a rigid phase and is responsible for remembering the original shape and the strong hydrogen bonding between the polymeric chains, which act as the soft phase and is responsible for fixing the temporary shape. The soft phase can be deformed when the material is above the Tg and if the material is cooled down while keeping the deformation new H bonding occurs, which results in the fixation of the temporary shape. In a typical shape memory cycle, the polymer is heated above the transition temperature ($T_{trans}$) which can be the glass transition temperature (Tg). Afterwards, the material is deformed and cooled down below the $T_{trans}$ while maintaining the deformation to fix the temporary shape. When the polymer is heated again to a temperature above the $T_{trans}$, it is able to recover its original shape. Hence, for most of the shape memory applications, the transition temperature is desirable to be above room temperature. The photocurable cross-linked compositions developed in this invention can be used as shape memory polymers in diverse fields such as biomedical, functional coatings, packaging and textile. Specifically, within the biomedical field, they can be used as stents, scaffolds and for dental applications. Additionally, the photocurable cross-linked compositions developed in this invention can be used as reversible adhesives in diverse fields for debond on demand applications.

"One or more", as used herein, relates to "at least one" and comprises 1, 2, 3, 4, 5, 6, 7, 8, 9 or more of the referenced species. Similarly, "at least one" means "one or more", i.e. 1, 2, 3, 4, 5, 6, 7, 8, 9 or more. "At least one", as used herein in relation to any component, refers to the number of chemically different atoms or molecules, i.e. to the number of different types of the referenced species, but not to the total number of atoms or molecules. For example, "at least one photolatent base catalyst" means that at least one type of photolatent base catalyst falling within the definition can be part of the composition, but that also two or more different types of photolatent base catalysts falling within this definition can be present, but does not mean that several compounds of only one type of photolatent base catalyst may be present.

Numeric values specified without decimal places refer to the full value specified with one decimal place. For example, "99 %" means "99.0 %", if not stated otherwise.

The expressions "approx." or "about", in conjunction with a numerical value, refer to a variance of $\pm$ 10 % relative to the given numerical value, preferably $\pm$ 5 %, more preferably $\pm$ 1 %, if not explicitly stated otherwise.

All percentages given herein in relation to the compositions relate to weight-% (wt.-%) relative to the total weight of the respective composition, if not explicitly stated otherwise.

The expression "essentially free of" means that the respective compound can be contained in the composition in principle, but then be present in a quantity that does not interfere with a function of the other components. In the context of the present invention, therefore, the property "essentially free of" a particular compound is preferably considered to be a total weight of less than 0.1 wt.-%, more preferably less than 0.001 wt.-%, in particular free (i.e. below detection limit) of this particular compound, based on the total weight of the composition.

Numeric ranges specified in the format "in/from x to y" include the values specified. If several preferred numeric ranges are specified in this format, it goes without saying that all ranges resulting from the combination of the different endpoints will also be included.

Molecular weight data refer to the number average molecular weight ($M_n$) in g/mol, unless the weight-average molecular weight is explicitly mentioned. It is preferably determined by GPC using polystyrene standards.

These and other aspects, features, embodiments, and advantages of the invention become apparent to the skilled person in the following detailed description and claims. Each feature or embodiment from one aspect of the invention can be used in any other aspect of the invention. Additionally, each feature of the composition, method or use can be combined with any other feature or embodiment of the composition, method or use. Furthermore, the examples contained herein are intended to describe and illustrate the invention, but do not restrict it and in particular, the invention is not limited to these examples.

In a first aspect, the present invention refers to a photo-curable composition, comprising

> A) at least one polythiol having at least two thiol groups;
> B) at least one polyisocyanate having at least two isocyanate groups;
> C) at least one (poly-)ene compound having at least one -C=C group;
> D) at least one photolatent base catalyst; and
> E) optionally at least one additive.

In a second aspect, the present invention pertains to a method of photo-curing the photo-curable composition according to the present invention, comprising the steps:

> i) providing the photo-curable composition by
>
> > i.a) mixing the components A) to D) and optionally E) or
> > i.b) mixing A), D) and optionally E) and separately mixing B) and C) before mixing the mixture containing A), D) and optionally E) and the mixture containing B) and C);
>
> ii) transferring the photo-curable composition of step i) to a mould;
> iii) exposing the photo-curable composition to UV-light to obtain a cross-linked polymer; and
> iv) optionally post-curing the obtained polymer by thermal or UV treatment.

In a third aspect, the present invention refers to a method of three dimensional printing an object with the photo-curable composition according to the present invention, comprising the steps:

> i) providing the photo-curable composition;
> ii) forming a layer of the photo-curable composition with a three dimensional printer;
> iii) exposing the layer under a suitable light source following a pattern of cross-sectional layer of the model to cure the layer;
> iv) providing a further layer of the photo-curable composition with the three dimensional printer upon the cured layer obtained after step iii);
> v) exposing the layer of step iv) under a suitable light source following a pattern of cross-sectional layer of the model in order to cure the layer and bond with the layer of step iii); and
> vi) optionally repeating steps iv) and v) until the three-dimensional object is obtained.

In a fourth aspect, the present invention pertains to a cross-linked polymer obtained by the method according to the second aspect.

In a fifth aspect, the present invention refers to a three-dimensional object obtained by the method according to the third aspect.

Finally, in a sixth aspect, the present invention refers to the use of the cross-linked polymer according to the present invention or the three-dimensional object according to the present invention as antireflective coating, encapsulant for LEDs, microlense for CMOS image sensors, as optical material, as biomedical functional coating, packaging and textile, stents, scaffolds, dental applications, and as reversible adhesive for debond on demand applications.

The photo-curable composition of the present invention comprises, essentially consists or consist of

A) at least one polythiol having at least two thiol groups;
B) at least one polyisocyanate having at least two isocyanate groups;
C) at least one (poly-)ene compound having at least one -C=C group;
D) at least one photolatent base catalyst; and
E) optionally at least one additive.

In various embodiments, the at least one polythiol (A) has two to six thiol groups, preferably two to four thiol groups, more preferably three to four thiol groups. Any polythiol is generally suitable, as long it contains at least two thiol groups.

In various embodiments the at least one polythiol is selected from primary and secondary aliphatic and oligomeric thiols having a molecular weight up to 5,000 g/mol, preferably up to 2,500 g/mol. Furthermore, the lower limit is preferably 90 g/mol.

In various embodiments, the at least one polythiol is selected from di-pentaerythritol tetra(3-mercapto-propionate), pentaerythritol tetra(3-mercaptopropionate), trimethylol-propane tris(3-mercaptopropionate), glycol di(3-mercaptopropionate), pentaerythritol tetramercaptoacetate, trimethylol-propane trimercaptoacetate, glycol dimercaptoacetate, ethoxylated trimethylolpropane tri(3-mercaptopropionate), propylene glycol-2,4,6-triallyloxy-1,3,5-triazine 3-mercaptopropionate, tris[2-(3-mercaptopropionyloxy)ethyl]isocyanurate, polycaprolactone tetra 3-mercaptopropionate, pentaerythritol tetrakis(3-mercaptobutylate), 1,4-bis(3-mercaptobutylyloxy)butane, 1,3,5-tris(3-mercaptobutyloxethyl)-1,3,5-triazine-2,4,6(1H,3H,5H)-trione, trimethylolpropane tris(3-mercarptobutyrate) or mixtures thereof; preferably from pentaerythritol tetra(3-mercaptopropionate), di-pentaerythritol tetra(3-mercaptopropionate), tris[2-(3-mercaptopropionyloxy)ethyl]isocyanurate, trimethylol-propane tris(3-mercaptopropionate, pentaerythritol tetrakis(3-mercaptobutylate), 1,3,5-tris(3-mercaptobutyloxethyl)-1,3,5-triazine-2,4,6(IH,3H,5H)-trione or mixtures thereof.

In various embodiments, the at least one polyisocyanate (B) has two to six isocyanate groups, preferably two to four isocyanate groups, more preferably two or three isocyanate groups. Any polyisocyanate is in general suitable, as long it contains at least two isocyanate groups.

In various embodiments, the at least one polyisocyanate has number average molecular weight of 500 to 25,000 g/mol, preferably 1,000 to 10,000 g/mol.

In various embodiments, the at least one polyisocyanate comprises 1,3,5-tris(6-isocyanatohexyl)-1,3,5-triazinane-2,4,6-trione, (E)-3,5-bis(6-isocyanatohexyl)-6-((6-isocyanatohexyl)imino)-1,3,5-oxadiazinane-2,4-dione or a mixture thereof. Suitable polyisocyanates are for example commercially available from Covestro AG under the trademark Desmodur®, whereby Desmodur® N3600 is preferred.

In various embodiments, the at least one (poly-)ene compound (C) has one to six, preferably one to three, more preferably two or three -C=C groups. In general, all (poly-)ene compounds are suitable, which contain at least one -C=C group. In preferred embodiments, the at least one (poly-)ene compound is a (meth)acrylic compound, a vinyl compound or an allyl compound, or a mixture thereof. As used herein and if not indicated otherwise, the group -C=C means a -CR=CR'R" group, wherein R, R' and R" can be any residue including, but not limited to H, alkyl, such as methyl, ethyl, propyl, and the like. In various embodiments, R is H or methyl and R' and R" are H.

In various embodiments, the at least one (poly-)ene compound is a (meth)acrylic compound, preferably a (meth)acrylic compound, with a molecular weight of up to 10,000 g/mol, preferably 5,000 g/mol, more preferably 2,000 g/mol.

In various embodiments, the at least one (poly-)ene compound is selected from isobornyl acrylate, 2-phenoxyethyl acrylate, 2,4,6-tribromophenyl acrylate, 1,6-hexanediol diacrylate, 1,10-decanediol diacrylate, 3-methy-1,5-pentanediol diacrylate, tricyclodecanedimethanol diacrylate, trimethylolpropane triacrylate, pentaerythritol tetraacrylate, dipropylene glycol diacrylate, ethoxylated bisphenol A diacrylate, ethoxylated hexanediol diacrylate, polyethylene glycol diacrylate, propoxylated neopentyl glycol diacrylate, urethane-, thiourethane-, epoxy- and polyester-end-capped acrylate oligomers, 2,4,6-tribromophenyl acrylate, isobornyl methacrylate, tetrahydrofurfuryl methacrylate, 2-phenoxyethyl methacrylate, ethylene glycol dimethacrylate, 1,4-butanediol dimethacrylate, 1,6-hexanediol dimethacrylate, ethoxylated bisphenol A dimethacrylate, tricyclodecanedimethanol dimethacrylate, trimethylolpropane trimethacrylate or mixtures thereof, preferably from 2,4,6-tribromophenyl acrylate, tricyclodecanedimethanol diacrylate, trimethylolpropane triacrylate, trimethylolpropane triacrylate, 2-phenoxyethyl acrylate, ethoxylated bisphenol A diacrylate or mixtures thereof or 2-phenoxyethyl methacrylate, ethoxylated bisphenol A dimethacrylate, tricyclodecanedimethanol dimethacrylate, trimethylolpropane trimethacrylate, 3-methylpentane-1,5-diyl diacrylate, 3-(acryloyloxy)-2,2-dimethylpropyl 4-(acryloyloxy)-2,2-dimethylbutanoate, ethane-1,2-diyl bis(2-methylacrylate) or mixtures thereof

In various embodiments, the at least one (poly-)ene compound is a vinyl compound with a molecular weight of up to 10,000 g/mol, preferably 5,000 g/mol, more preferably 2,000 g/mol.

In various embodiments, the at least one (poly-)ene compound is selected from aliphatic and aromatic vinyl compounds; preferably from vinyls, vinyl ethers, vinyl esters, vinyl halides and vinyl amides, more preferably from di(ethylene glycol) divinyl ether, 1,4-butanediol divinyl ether, hexanedioic acid divinyl ester, trivinyl cyclohexane, 1,4-cyclohexane dimethanol divinyl ether, divinyl benzene or mixtures thereof, more preferably from trivinyl cyclohexane, 1,4-cyclohexane dimethanol divinyl ether, divinyl benzene, tetravinylsilane, dibutyldivinylstannane, or mixtures thereof.

In various embodiments, the at least one (poly-)ene compound is an allyl compound with a molecular weight of up to 10,000 g/mol, preferably 5,000 g/mol, more preferably 2,000 g/mol.

In various embodiments, the at least one (poly-)ene compound is selected from aliphatic and aromatic allyl compounds; preferably from allyls, allyl ethers, allyl carbonates, allyl esters, allyl halides and allyl amides or mixtures thereof, more preferably from diallyl carbonate, diallyl phthalate, adipic acid diallyl ester, 2,4,6-triallyloxy-1,3,5-triazine, 1,3,5-triallyl-1,3,5-triazine-2,4,6(1H,3H,5H)-trione or mixtures thereof, most preferably from diallyl phthalate and 1,3,5-triallyl-1,3,5-triazine-2,4,6(1H,3H,5H)-trione, triallyl benzene-1,2,4-tricarboxylate, tetraallyl benzene-1,2,4,5-tetracarboxylate, tetraallylgermane or mixtures thereof.

In various embodiments, the thiol groups : NCO groups : -C=C groups are present in an equivalent (molar) ratio of 0.7 : 0.05 : 1.3 to 1.3 : 1.3 : 0.05, preferably 0.9 : 0.6 : 0.4 to 1.1 : 0.9 : 0.1.

The photo-curable composition according to the present invention further contains at least one photolatent base catalyst (D).

In various embodiments, the at least one photolatent base catalyst is present in 0.01 to 5 wt.-%, preferably 0.05 to 2 wt.-%, based on the total weight of the composition.

In various embodiments, the at least one photolatent base catalyst is selected from 1,8-diazabicyclo[5.4.0]undec-7-ene-anthracene-tetraphenyl borate, 1,5,7-triazabicyclo[4.4.0]dec-5-ene hydrogen tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 1-(anthracen-9-ylmethyl)-2,3,4,6,7,8,9,10-octahydropyrimido[1,2-a]azepin-1-ium tetraphenyl borate, 1-(anthracen-9-ylmethyl)-9-ethyl-3,4,6,7,8,9-hexahydro-2H-pyrimido[1,2-a]pyrimidin-1-ium tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 2,3,4,6,7,8-hexahydropyrrolo[1,2-a]pyrimidin-1-ium tetraphenylborate, 1-(anthracen-9-ylmethyl)-2,3,4,6,7,8-hexahydropyrrolo[1,2-a]pyrimidin-1-ium tetraphenylborate, 3-(anthracen-9-ylmethyl)-1-methyl-1H-imidazol-3-ium tetraphenylborate, 3,4,6,7,8,9-hexahydro-2H-pyrimido[1,2-a]pyrimidin-1-ium tetraphenylborate, 1,2-dicyclohexyl-4,4,5,5-tetramethylbiguanidium n-butyltriphenylborate, (Z)-([Bis(dimethylamino)methylidene]amino)-N-cyclohexyl(cyclohexylamino)methaniminiumtetrakis(3-fluorophenyl)borate or mixtures thereof; preferably from 1,8-diazabicyclo[5.4.0]undec-7-ene-anthracene-tetraphenyl borate, 1,5,7-triazabicyclo[4.4.0]dec-5-ene hydrogen tetraphenyl borate, 1-(anthracen-9-ylmethyl)-2,3,4,6,7,8,9,10-octahydropyrimido[1,2-a]azepin-1-ium tetraphenyl borate, and 1-(anthracen-9-ylmethyl)-9-ethyl-3,4,6,7,8,9-hexahydro-2H-pyrimido[1,2-a]pyrimidin-1-ium tetraphenyl borate, 2,3,4,6,7,8-hexahydropyrrolo[1,2-a]pyrimidin-1-ium tetraphenylborate, 1-(anthracen-9-ylmethyl)-2,3,4,6,7,8-hexahydropyrrolo[1,2-a]pyrimidin-1-ium tetraphenylborate, 3-(anthracen-9-ylmethyl)-1-methyl-1H-imidazol-3-ium tetraphenylborate, 3,4,6,7,8,9-hexahydro-2H-pyrimido[1,2-a]pyrimidin-1-ium tetraphenylborate, 1,2-dicyclohexyl-4,4,5,5-tetramethylbiguanidium n-butyltriphenylborate, (Z)-([Bis(dimethylamino)methylidene]amino)-N-cyclohexyl(cyclohexylamino)methaniminiumtetrakis(3-fluorophenyl)borate or mixtures thereof.

In various embodiments, the at least one photolatent base catalyst is able to release a basic component, of which its protonated counterpart has a pKa of above 10.

The photo-curable composition of the present invention can additionally comprise at least one additive (E). Generally, all additives in the field of photo-curable compositions known to the skilled person are suitable.

In various embodiments, the at least one additive is present in up to 10 wt.-%, preferably 0.001 to 8 wt.-%, more preferably 0.05 to 5 wt.-%, most preferably 0.1 to 1 wt.-%, based on the total weight of the composition.

In various embodiments, the at least one additive comprises (E1) at least one inhibitor selected from acid boric esters or phosphoric acid esters, preferably selected from trialkyl borates and dialkyl phosphates, more preferably from triisopropyl borate, tributyl borate, triethyl borate, triphenyl borate and tri-tert-butyl borate, dibutyl phosphate, tris-(2-butoxyethyl) phosphate, triisobutyl phosphate and bis(2-ethylhexyl) phosphate, more preferably tributyl borate, dibutyl phosphate and bis(2-ethylhexyl) phosphate or mixtures thereof.

In various embodiments, the at least one additive comprises (E2) at least one compound selected from solvents, fillers, fire retardants, UV-stabilizer, pigments, dyes or mixtures thereof; preferably wherein the fillers are selected from carbon fibers and metal oxide nanoparticles.

In various embodiments, the at least one additive comprises (E3) at least one radical photoinitiator, preferably in an amount of 0.01 to 4 wt.-%, more preferably from 0.05 to 2 wt.-%, preferably selected from 2-methyl-4-(methylthio)-2-morpholinopropiophenone, 2-(9-oxoxanthen-2-yl)propionic acid-1,5,7 triazabicyclo[4.4.0]dec-5-ene and isopropylthioxanthone, 2-hydroxy-2-methylpropiophenone, diphenyl(2,4,6-trimethylbenzoyl)phosphine oxide, ethyl (2,4,6-trimethylbenzoyl) phenylphosphinate, diphenyl(2,4,6-trimethylbenzoyl)phosphine oxide, ethyl (2,4,6-trimethylbenzoyl) phenylphosphinate, bis(2,4,6-trimethylbenzoyl)-phenylphosphineoxide or mixtures thereof, more preferably from 2-hydroxy-2-methylpropiophenone, 2-(9-oxoxanthen-2-yl)propionic acid-1,5,7 triazabicyclo[4.4.0]dec-5-ene and isopropylthioxanthone, bis(2,4,6-trimethylbenzoyl)-phenylphosphineoxide or mixtures thereof.

In various embodiments, the at least one additive comprises (E4) at least one sensitizer, preferably in an amount of 0.01 to 4 wt. -%, more preferably from 0.05 to 2 wt.-%, preferably selected from 2-isopropylthioxanthone, 9,10-Diethoxyanthracene, 9,10-Dibutoxyanthracene, Vitamin $K_1$, 2-Ethyl-9,10-dimethoxyanthracene, 1-chloro-4-propoxythioxanthone or mixtures thereof.

In various embodiments, the photo-curable composition according to the present invention has a viscosity of 1 to 5,000 m*Pas, preferably 10 to 3,000 m*Pas measured with a AR2000 rheometer from TA instruments equipped with a Peltier plate and a 40mm parallel plate at 25°C in the shear stress range of 100-500 Pa.

The present invention as well refers to a method of photo-curing the photo-curable composition according to the present invention, comprising, consisting essentially or consisting of the steps:

i) providing the photo-curable composition by

i.a) mixing the components A) to D) and optionally E) or
i.b) mixing A), D) and optionally E) and separately mixing B) and C) before mixing the mixture containing A), D) and optionally E) and the mixture containing B) and C);

ii) transferring the photo-curable composition of step i) to a mould;
iii) exposing the photo-curable composition to UV-light to obtain a cross-linked polymer; and
iv) optionally post-curing the obtained polymer by thermal or UV treatment,

preferably by thermal treatment for 0.5 to 10 hours, more preferably 1 to 5 hours and/or preferably at 80 to 140°C, more preferably 100 to 120 °C or preferably by UV treatment using a lamp with a power lower than 500W, more preferably lower than 100W and/or preferably for less than 10 hours, more preferably for less than 2 hours.

A cross-linked polymer is obtainable using said methods and also forms part of the invention.

Furthermore, the present invention refers to a method of three dimensional printing an object with the photo-curable composition according to the present invention, comprising or consisting of the steps:

i) providing the photo-curable composition;
ii) forming a layer of the photo-curable composition with a three dimensional printer, preferably an SLA or DLP printer;
iii) exposing the layer under a suitable light source following a pattern of cross-sectional layer of the model to cure the layer;
iv) providing a further layer of the photo-curable composition with the three dimensional printer upon the cured layer obtained after step iii);
v) exposing the layer of step iv) under a suitable light source following a pattern of cross-sectional layer of the model in order to cure the layer and bond with the layer of step iii); and
vi) optionally repeating steps iv) and v) until the three-dimensional object is obtained.

Using said method, a three-dimensional object can be obtained.

The cross-linked polymer and the three-dimensional object according to the present invention have in various embodiment a glass transition temperature Tg of 0 to 200 °C, preferably 25 to 150 °C, more preferably 40 to 125 °C, measured according to ISO 11357-2:2014-07 or ASTM E1356-08(2014).

In further various embodiments, the cross-linked polymer and the three-dimensional object according to the present invention have a refractive index of 1.50 to 1.80, preferably 1.54 to 1.65, more preferably 1.58 to 1.60, measured with an Electronic Abbe Refractometer AR 2008 from A.Krüss Optronic at 21°C and at standard wavelength of 589 nm.

The cross-linked polymer and the three-dimensional object according to the present invention can be used as antireflective coating, encapsulant for LEDs, microlense for CMOS image sensors, as optical material, as biomedical functional coating, packaging and textile, stents, scaffolds, dental applications, and as reversible adhesive for debond on demand applications, preferably as reversible adhesive for debond on demand applications.

**Examples**

Glass transition temperature:

The Tg of the samples was determined using a DSC Q2000 equipped with a Refrigerated Cooling System 90, both from TA instruments. The DSC experiments comprised two cooling/heating cycles at a scanning rate of 10°C/min using $N_2$ as a purge gas. The measurement can be performed in accordance with ISO 11357-2:2014-07 or ASTM E1356-08(2014).

Refractive index ($n_D{}^{21}$):

The refractive index of the samples was measured using an Electronic Abbe Refractometer AR 2008 from A. Krüss Optronic. All measurements were performed at 21°C and at standard wavelength of 589 nm.

Abbe's number ($v_D{}^{21}$)

The Abbe's number of the samples was measured using a Metricon 2010/M Prism Coupler equipped with three lamps emitting at 402, 511 and 687 nm. All measurements were performed at 21°C and the value at λ=589 nm was interpolated by the software.

Initial viscosity:

The initial viscosity of the formulations was measured using an AR2000 rheometer from TA instruments equipped with a Peltier plate and a 40mm parallel plate. The viscosity of the formulations was checked at 25°C in the shear stress range of 100-500 Pa.

Pot-life:

The pot-life of the formulations is defined as the time during which the viscosity remains below the viscosity limit of 3000 m*Pas. The pot-life was checked by monitoring the viscosity over time as above described.

Shape memory properties:

Shape memory properties of the samples were characterized using a manual procedure which consists of five steps:

    1. Heat the sample at the programming temperature ($T_{prog}$) which is above $T_{trans}$.
    2. Bend the sample at a specific angle and let it cool for 3 minutes while keeping the bent shape.
    3. Remove the stress and measure the angle after one minute to see if it keeps the temporary shape (calculate Rf).
    4. Heat the sample for 1 minute at the recovery temperature ($T_{rec}$) to allow the shape recovery.
    5. Measure the angle after the recovery and calculate $R_r$.

The shape recovery ratio ($R_r$) and the shape fixity ratio (Rf) are the two main parameters to asses the shape memory behavior. $R_f$ and $R_r$ represent the ability of the material to fix the temporary shape and the recovery to the original shape, respectively. These values are calculated using the following equations:

$$R_f = \frac{\varepsilon_u}{\varepsilon_m} \cdot 100; \ R_r = \frac{\varepsilon_m - \varepsilon_p}{\varepsilon_m} \cdot 100$$

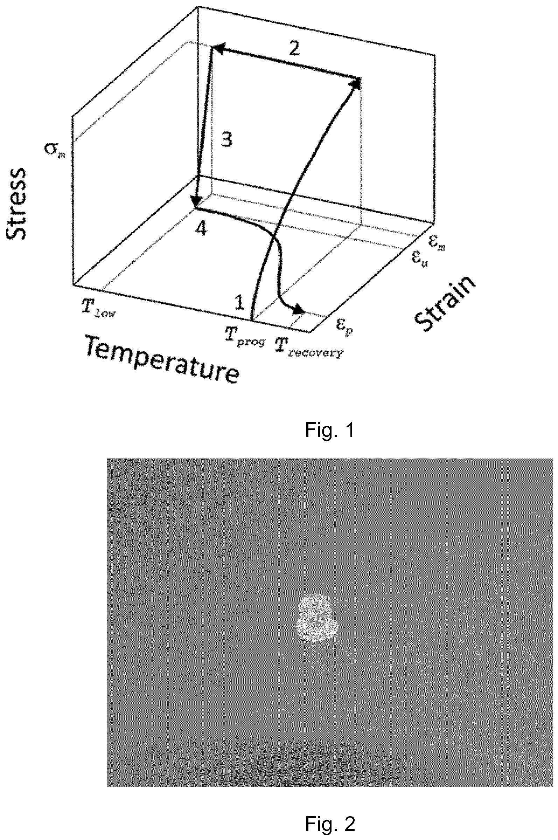

Where $\varepsilon_u$ is the temporary fixed strain (end of step 3), $\varepsilon_m$ is the applied strain (end of step 1) and $\varepsilon_p$ is the strain after the sample has recovered its original shape (end of step 4). Normally, the shape memory cycle is performed more than once to assess the consistency of $R_f$ and $R_r$ (Figure 1).

**Examples 1 and 2 and Comparative Example 1:**

The SH:NCO:methacrylate equivalent ratio was set at 1.1:0.8:0.2. 1.9085 g of tris(6-isocyanatohexyl)-1,3,5-triazinane-2,4,6-trione (Desmodur® N3600) are added to a mixture of 1.7969g of pentaerythritol tetra(3-mercaptopropionate) (Thiocure® PETMP) and 0.2946 g of trimethylolpropane trimethacrylate (SR351). The mixture was mixed for 1 min at 3500 rpm and stored at room temperature. The formulation viscosity was checked over time with a rheometer. A formulation containing the same monomers but with a 1,8-diazabicyclo[5.4.0]undec-7-ene-anthracene-tetraphenyl borate (DBU-Ant-BPh4) as a photolatent base catalyst was UV cured. Firstly, 0.0040 g (0.05 wt.-%) of DBU-Ant-BPh4 were added to 1.7951 g of Thiocure® PETMP and mixed for 1 min at 3500 rpm. Afterwards, 1.9066 g of Desmodur® N3600 and 0.2943 g of SR351 were added to the previous mixture and were mixed for 1 min at 3500 rpm (Example 1). The formulation was degassed under vacuum if there were bubbles present. Then the formulation was casted in the appropriate mould and placed in a UV curing chamber equipped with a Hg lamp. The formulation was irradiated 3 times for 10 seconds. The reaction conversion was monitored by the disappearance of the NCO peak ($\sim$2260cm$^{-1}$) and the acrylate peak ($\sim$810/1630 cm$^{-1}$) by ATR-FTIR. If the reaction was not completed upon UV light exposure the sample was thermally post-cured. The fully cured sample was characterized by DSC and refractometry.

The SH:NCO:methacrylate equivalent ratio was set at 1.1:0.8:0.2. 1.7812 g of tris(6-isocyanatohexyl)-1,3,5-triazinane-2,4,6-trione (Desmodur® N3600) are added to a mixture of 1.6770g of pentaerythritol tetra(3-mercaptopropionate) (Thiocure® PETMP) and 0.5419 g of isobornyl acrylate. The mixture was mixed for 1 min at 3500 rpm and stored at room temperature. The formulation viscosity was checked over time with a rheometer. A formulation containing the same monomers but with a 1,8-diazabicyclo[5.4.0]undec-7-ene-Anthracene-Tetraphenyl borate (DBU-Ant-BPh4) as a photolatent base catalyst was UV cured. Firstly, 0.0040g (0.1 wt.-%) of DBU-Ant-BPh4 were added to 1.6753 g of Thiocure® PETMP and mixed for 1 min at 3500rpm. Afterwards, 1.7794 g of Desmodur® N3600 and 0.5413 g of isobornyl acrylate were added to the previous mixture and were mixed for 1 min at 3500 rpm (Example 2). The formulation was degassed under vacuum if there were bubbles present. Then the formulation was casted in the appropriate mould and placed in a UV curing chamber equipped with a Hg lamp. The formulation was irradiated 3 times for 10 seconds. The reaction conversion was monitored by the disappearance of the NCO peak ($\sim$2260cm$^{-1}$) and the acrylate peak ($\sim$810/1630 cm$^{-1}$,) by ATR-FTIR. If the reaction was not completed upon UV light exposure the sample was thermally post-cured. The fully cured sample was characterized by DSC and refractometry.

For comparison, a formulation with a SH:NCO:methacrylate equivalent ratio of 1.1:1.0:0.0 is prepared by adding 2.2793 g of tris(6-isocyanatohexyl)-1,3,5-triazinane-2,4,6-trione (Desmodur® N3600) to 1.7167g of pentaerythritol tetra(3-mercaptopropionate) (Thiocure® PETMP). The mixture was mixed for 1 min at 3500 rpm and stored at room temperature. The formulation viscosity was checked over time with a rheometer.

A formulation containing the same monomers but with a 1,8-diazabicyclo[5.4.0]undec-7-ene-Anthracene-Tetraphenyl borate (DBU-Ant-BPh4) as a photolatent base catalyst was UV cured. Firstly, 0.0040g (0.1 wt%) of DBU-Ant-BPh4 were added to 1.7167 g of Thiocure® PETMP and mixed for 1 min at 3500rpm. Afterwards, 2.2793 g of Desmodur® N3600 were added to the previous mixture and were mixed for 1 min at 3500 rpm. The formulation was degassed under vacuum if there were bubbles present. Then the formulation was casted in the appropriate mould and placed in a UV curing chamber equipped with a Hg lamp. The formulation was irradiated 3 times for 10 seconds. If the reaction was not completed upon UV light exposure the sample was thermally post-cured. The fully cured sample was characterized by DSC and refractometry (Comparative example 1).

|  | SH:NCO:acrylate equivalent ratio | Initial $\eta$ (cP) | Pot-life (h) | $T_g$ (°C) | Refractive index ($n_D^{21}$) | Abbe's number ($v_D^{21}$) |
|---|---|---|---|---|---|---|
| Comparative Ex. 1 | 1.1 : 1 : 0 | 594 | $\sim$28 | 51 | 1.551 | 45.9 |
| Ex. 1 | 1.1 : 0.8 : 0.2 | 467 | $\sim$33 | 45 | 1.548 | 46.1 |
| Ex. 2 | 1,1:0.8:0.2 | 292 | $\sim$50 | 38 | 1.566 | 47.7 |

Comparative example 1 is a binary formulation containing a multi-functional thiol and a multi-functional isocyanate which yields a viscous reactive formulation. On the other hand, Example 1 and Example 2 are ternary formulations containing three main components: a multi-functional thiol, a multi-functional isocyanate and a multi-functional ene monomer which in this case is a (meth)acrylate. These formulations are less viscous and, in some cases, are less reactive as seen by the extension of the pot-life. Regarding the optical properties, the refractive index can be boosted as seen with Example 2. The high Abbe's number values means a lower dispersion in the refractive index. The main improvements of Examples 1 and 2 are the reduction of the viscosity and the extension of the pot-life. Additionally, other desired properties such as the refractive index or the Abbe's number can be improved as well.

**Examples 3 and 4 and Comparative Example 2:**

The SH : NCO : vinyl equivalent ratio was set at 1.1 : 0.75 : 0.25. 1.9583 g of tris(6-isocyanatohexyl)-1,3,5-triazinane-2,4,6-trione (Desmodur® N3600) are added to a mixture of 2.1285 g of dipentaerythritol hexa(3-mercapto-propionate) (Thiocure® DiPETMP) and 0.3463 g of 1,4-cyclohexane dimethanol divinyl ether. The mixture was mixed for 1 min at 3500 rpm and stored at room temperature. The formulation viscosity was checked over time with a rheometer. A formulation containing the same monomers but with a 1,8-diazabicyclo[5.4.0]undec-7-ene-Anthracene-Tetraphenyl borate (DBU-Ant-BPh4) as a photolatent base catalyst, and 2-hydroxy-2-methylpropiophenone (Darocur® 1173) as photoinitiator was UV cured. Firstly, 0.0022 g (0.05 wt.-%) of DBU-Ant-BPh4 and 0.0022 g (0.05 wt.-%) of Darocur® 1173 were added to 2.0811 g of Thiocure® Di-PETMP. The mixture was then speedmixed 1 min at 3500rpm. Afterwards, 2.1817 g of Desmodur® N3600 and 0.3033 g of 1,4-cyclohexane dimethanol divinyl ether were added to the previous mixture and were mixed for 1 min at 3500rpm (Example 3). The formulation was degassed under vacuum if there were bubbles present. Then the mixture was casted in the appropriate mould and placed in a UV curing chamber equipped with a Hg lamp. The mixture was irradiated 3 times for 10 seconds. The reaction conversion was monitored by the disappearance of the NCO peak ($\sim$2260cm$^{-1}$) and the C-H out of the plane bending of the double bond peak (910 cm$^{-1}$) by ATR-FTIR. If the reaction was not completed upon UV light exposure the sample was thermally post-cured. The fully cured sample was characterized by DSC and refractometry.

The SH:NCO:vinyl equivalent ratio was set at 1.1 : 0.5 : 0.5. 1.3692 g of tris(6-isocyanatohexyl)-1,3,5-triazinane-2,4,6-trione (Desmodur® N3600) are added to a mixture of 2.222 g of dipentaerythritol hexa(3-mercaptopropionate) (Thiocure® DiPETMP) and 0.7264 g of 1,4-cyclohexane dimethanol divinyl ether. The mixture was mixed for 1 min at 3500 rpm and stored at room temperature. The formulation viscosity was checked over time with a rheometer. A formulation containing the same monomers but with a 1,8-diazabicyclo[5.4.0]undec-7-ene-anthracenetetraphenyl borate (DBU-Ant-BPh4) as a photolatent base catalyst and 2-hydroxy-2-methylpropiophenone (Darocur® 1173) as photoinitiator, was UV cured. Firstly, 0.0022 g (0.05 wt.-%) of DBU-Ant-BPh4 and 0.0022 g (0.05 wt.-%) of Darocur® 1173 were added to 2.0424 g of Thiocure® Di-PETMP. The mixture was then speedmixed 1 min at 3500 rpm. Afterwards, 1.3677 g of Desmodur® N3600 and 0.7256 g of 1,4-cyclohexane dimethanol divinyl ether were added to the previous mixture and were mixed for 1 min at 3500 rpm (Example 4). The formulation was degassed under vacuum if there were bubbles present. Then the mixture was casted in the appropriate mould and placed in a UV curing chamber equipped with a Hg lamp. The mixture was irradiated 3 times for 10 seconds. The reaction conversion was monitored by the disappearance of the NCO peak ($\sim$2260cm$^{-1}$) and the C-H out of the plane bending of the double bond peak (910 cm$^{-1}$) by ATR-FTIR. If the reaction was not completed upon UV light exposure the sample was thermally post-cured. The fully cured sample was characterized by DSC and refractometry.

For comparison, a formulation with a SH:NCO:vinyl equivalent ratio of 1.1:1.0:0.0 is prepared by adding 2.1901 g of tris(6-isocyanatohexyl)-1,3,5-triazinane-2,4,6-trione (Desmodur® N3600) to 1.8079 g of dipentaerythritol hexa(3-mercaptopropionate) (Thiocure® DiPETMP). The mixture was mixed for 1 min at 3500 rpm and stored at room temperature. The formulation viscosity was checked over time with a rheometer.

A formulation containing the same monomers but with a 1,8-diazabicyclo[5.4.0]undec-7-ene-Anthracene-Tetraphenyl borate (DBU-Ant-BPh4) as a photolatent base catalyst was UV cured. Firstly, 0.0020g (0.05 wt%) of DBU-Ant-BPh4 were added to 1.8079 g of Thiocure® DiPETMP and mixed for 1 min at 3500rpm. Afterwards, 2.1901 g of Desmodur® N3600 were added to the previous mixture and were mixed for 1 min at 3500 rpm. The formulation was degassed under vacuum if there were bubbles present. Then the formulation was casted in the appropriate mould and placed in a UV curing chamber equipped with a Hg lamp. The formulation was irradiated 3 times for 10 seconds. If the reaction was not completed upon UV light exposure the sample was thermally post-cured. The fully cured sample was characterized by DSC and refractometry (Comparative example 2).

| | SH:NCO:vinyl equivalent ratio | Initial $\eta$ (cP) | Pot-life (h) | $T_g$ (°C) | Refractive index ($n_D^{21}$) | Storing conditions |
|---|---|---|---|---|---|---|
| Comparative Ex.2 | 1.1 : 1:0 | 1157 | $\sim$8 | 70 | 1.548 | 25°C |
| Ex. 3 | 1.1 : 0.75 :0.25 | 744 | $\sim$24 | 52 | 1.556 | 25°C |
| Ex. 4 | 1.1:0.5:0.5 | 373 | $\sim$16 | 22 | 1.542 | 25°C |

Comparative Ex. 2 only contains a multi-functional thiol and a multi-functional isocyanate which yields a viscous reactive formulation. On the other hand, Examples 3 and 4 contain three main components: a multi-functional thiol, a multi-functional isocyanate and a multi-functional ene monomer which, in this case, are vinyls. These formulations are less viscous and, in some cases, are less reactive as seen by the extension of the pot-life. Thus, the main improvements of examples 3 and 4 are the reduction of the viscosity and the extension of the pot-life.

**Example 5:**

The SH : NCO : vinyl equivalent ratio was set at 1.1 : 0.9 : 0.1. 2.3782 g of tris(6-isocyanatohexyl)-1,3,5-triazinane-2,4,6-trione (Desmodur® N3600) are added to a mixture of 2.2289 g of trimethylolpropane tris(3-mercaptobutyrate) (TMPTMB) and 0.0773 g of 1,2,4-trivinyl cyclohexane. The mixture was mixed for 1 min at 3500 rpm and stored at room temperature (Comparative example 5). Two mixtures were prepared with the same composition: one was stored at 5°C while the second was stored at room temperature (25 °C). The formulations viscosity was checked over time with a rheometer.

| | Storing conditions | SH:NCO:vinyl equivalent ratio | Initial $\eta$ (cP) | Pot-life (days) |
|---|---|---|---|---|
| Example 5 | 5°C | 1.1 : 0.9 :0.1 | 409 | ~13 |
| | 25°C | | | ~8 |

As seen in the table, by storing the formulations at low temperature (5°C) the pot-life is extended from 8 days to 13 days. The extension is due to the fact that at low temperature the kinetics of the reaction in the dark are slowed down.

**Examples 6 and 7 and Comparative Example 3:**

The SH : NCO : allyl equivalent ratio was set at 1.1 : 0.8 : 0.2. 2.0447 g of tris(6-isocyanatohexyl)-1,3,5-triazinane-2,4,6-trione (Desmodur® N3600) are added to a mixture of 2.0835 g of Dipentaerythritol hexa(3-mercaptopropionate) (Thiocure® DiPETMP) and 0.3402 g of diallyl phthalate. The mixture was mixed for 1 min at 3500 rpm and stored at room temperature. The formulation viscosity was checked over time with a rheometer.

A formulation containing the same monomers but with a 1,8-diazabicyclo[5.4.0]undec-7-ene-anthracene-tetraphenyl borate (DBU-Ant-BPh4) as a photolatent base catalyst and 2-hydroxy-2-methylpropiophenone (Darocur® 1173) as photoinitiator was UV cured. Firstly, 0.0022 g (0.05 wt.-%) of DBU-Ant-BPh4 and 0.0022 g (0.05 wt.-%) of Darocur® 1173 were added to 2.0811 g of Thiocure® Di-PETMP. The mixture was then speedmixed 1 min at 3500rpm. Afterwards, 2.0424 g of Desmodur® N3600 and 0.3398 g of diallyl phthalate were added to the previous mixture and were mixed for 1 min at 3500rpm (Example 6). The formulation was degassed under vacuum if there were bubbles present. Then the mixture was casted in the appropriate mould and placed in a UV curing chamber equipped with a Hg lamp. The mixture was irradiated 3 times for 10 seconds. The reaction conversion was monitored by the disappearance of the NCO peak (~2260cm$^{-1}$) and the C-H out of the plane bending of the double bond peak (910 cm$^{-1}$) by ATR-FTIR. If the reaction was not completed upon UV light exposure the sample was thermally post-cured. The fully cured sample was characterized by DSC and refractometry.

The SH : NCO : allyl equivalent ratio was set at 1.1 : 0.6 : 0.4. 1.5717 g of tris(6-isocyanatohexyl)-1,3,5-triazinane-2,4,6-trione (Desmodur® N3600) are added to a mixture of 2.1354 g of dipentaerythritol hexa(3-mercaptopropionate) (Thiocure® DiPETMP) and 0.6974 g of diallyl phthalate. The mixture was mixed for 1 min at 3500 rpm and stored at room temperature. The formulation viscosity was checked over time with a rheometer. A formulation containing the same monomers but with a 1,8-diazabicyclo[5.4.0]undec-7-ene-anthracene-tetraphenyl borate (DBU-Ant-BPh4) as a photolatent base catalyst and 2-hydroxy-2-methylpropiophenone (Darocur® 1173) as photoinitiator was UV cured. Firstly, 0.0022 g (0.05 wt.-%) of DBU-Ant-BPh4 and 0.0022 g (0.05 wt.-%) of Darocur® 1173 were added to 2.1331 g of Thiocure® Di-PETMP. The mixture was then speedmixed 1 min at 3500 rpm. Afterwards, 1.5700 g of Desmodur® N3600 and 0.6966 g of diallyl phthalate were added to the previous mixture and were mixed for 1 min at 3500 rpm (Example 7). The formulation was degassed under vacuum if there were bubbles present. Then the mixture was casted in the appropriate mould and placed in a UV curing chamber equipped with a Hg lamp. The mixture was irradiated 3 times for 10 seconds. The reaction conversion was monitored by the disappearance of the NCO peak (~2260cm$^{-1}$) and the C-H out of the plane bending of the double bond peak (910 cm$^{-1}$) by ATR-FTIR. If the reaction was not completed upon UV light exposure the sample was thermally post-cured. The fully cured sample was characterized by DSC and refractometry.

For comparison, a formulation with a SH:NCO:vinyl equivalent ratio of 1.1:1.0:0.0 is prepared by adding 2.1901 g of tris(6-isocyanatohexyl)-1,3,5-triazinane-2,4,6-trione (Desmodur® N3600) to 1.8079 g of dipentaerythritol hexa(3-mercaptopropionate) (Thiocure® DiPETMP). The mixture was mixed for 1 min at 3500 rpm and stored at room temperature. The formulation viscosity was checked over time with a rheometer.

A formulation containing the same monomers but with a 1,8-diazabicyclo[5.4.0]undec-7-ene-Anthracene-Tetraphenyl borate (DBU-Ant-BPh4) as a photolatent base catalyst was UV cured. Firstly, 0.0020g (0.05 wt.-%) of DBU-Ant-BPh4 were added to 1.8079 g of Thiocure® DiPETMP and mixed for 1 min at 3500rpm. Afterwards, 2.1901 g of Desmodur® N3600 were added to the previous mixture and were mixed for 1 min at 3500 rpm. The formulation was degassed under vacuum if there were bubbles present. Then the formulation was casted in the appropriate mould and placed in a UV curing chamber equipped with a Hg lamp. The formulation was irradiated 3 times for 10 seconds. If the reaction was not completed upon UV light exposure the sample was thermally post-cured. The fully cured sample was characterized by DSC and refractometry (Comparative example 3).

|  | SH:NCO:allyl equivalent ratio | Initial $\eta$ (cP) | Pot-life (h) | $T_g$ (°C) | Refractive index ($n_D^{21}$) |
|---|---|---|---|---|---|
| Comparative Ex. 3 | 1.1 : 1 : 0 | 1157 | ~8 | 70 | 1.548 |
| Ex. 6 | 1.1 : 0.8 : 0.2 | 705 | ~16 | 53 | 1.565 |
| Ex. 7 | 1.1 : 0.6 : 0.4 | 511 | ~23 | 32 | 1.577 |

Comparative ex. 3 only contains a multi-functional thiol and a multi-functional isocyanate which yields a viscous reactive formulation. On the other hand, Example 6 and Example 7 contain three main components: a multi-functional thiol, a multi-functional isocyanate and a multi-functional ene monomer which, in this case, are allyls. These formulations are less viscous and, in some cases, are less reactive as seen by the extension of the pot-life. Thus, the main improvement of Examples 6 and 7 is the reduction of the viscosity and the extension of the pot-life. Also, it was observed that when adding an aromatic monomer (diallyl phthalate) the refractive index is boosted.

**Examples 8 to 10 and Comparative Example 4**

Samples containing Thiocure® PETMP, Desmodur® N3600 and 3-methylpentane-1,5-diyl diacrylate (SR341) with three different SH:NCO:acrylate equivalent ratios were prepared. As an illustrative example a formulation with a SH:NCO:acrylate equivalent ratio of 1.0:0.9:0.1 was prepared by adding 2.1842g of tris(6-isocyanatohexyl)-1,3,5-triazinane-2,4,6-trione (Desmodur® N3600) to a mixture of 1.6617g of pentaerythritol tetra (3-mercaptopropionate) (Thiocure® PETMP) and 0.1501 g of 3-methylpentane-1,5-diyl diacrylate (SR341) (Example 8). The mixture is mixed for 1 minute at 3500 rpm. Then, 0.0040 g of 1,8-diazabicyclo[5.4.0]undec-7-ene-anthracene-tetraphenyl borate (DBU-Ant-BPh4) was added to make the formulation UV curable. After the addition of the catalyst the mixture is mixed for 1 minute at 3500 rpm. After mixing the formulation is degassed under vacuum, casted in the desired mould and placed in the UV curing chamber equipped with a Hg lamp. The mixture was irradiated 3 times for 10 seconds. The reaction conversion was monitored by the disappearance of the NCO peak ($\sim$2260cm$^{-1}$) and the C-H out of the plane bending of the double bond peak (810 cm$^{-1}$) by ATR-FTIR. If the reaction was not completed upon UV light exposure the sample was thermally post-cured. The formulations at other equivalent ratios were prepared following the same procedure but with the appropriate amounts (examples 9 and 10).

For comparison, a formulation with a SH:NCO:methacrylate equivalent ratio of 1.1:1.0:0.0 is prepared by adding 2.2793 g of tris(6-isocyanatohexyl)-1,3,5-triazinane-2,4,6-trione (Desmodur® N3600) to 1.7167g of pentaerythritol tetra (3-mercaptopropionate) (Thiocure® PETMP). The mixture was mixed for 1 min at 3500 rpm. To this mixture, 0.0040 g of 1,8-diazabicyclo[5.4.0]undec-7-ene-Anthracene-Tetraphenyl borate (DBU-Ant-BPh4) are added and the mixture was mixed for 1 min at 3500 rpm. The formulation was degassed under vacuum if there were bubbles present. Then the formulation was casted in the appropriate mould and placed in a UV curing chamber equipped with a Hg lamp. The formulation was irradiated 3 times for 10 seconds. If the reaction was not completed upon UV light exposure the sample was thermally post-cured (Comparative example 4).

The shape memory properties of the samples were measured by performing the shape memory test consisting of the following steps:

1. Heat the sample at the programming temperature ($T_{prog}$) which is above $T_{trans}$.
2. Bend the sample at 45° and let it cool for 3 minutes while keeping the bent shape.
3. Remove the stress and measure the angle after one minute to see if it keeps the temporary shape (calculate Rf).
4. Heat the sample for 1 minute at the recovery temperature ($T_{rec}$) to allow the shape recovery.
5. Wait 3 minutes to allow the sample to cool down, measure the angle after the recovery and calculate $R_r$.

The strain ($\varepsilon$) at each step is calculated from the angles measured bearing in mind that a 100% deformation would be bending the sample 360°. Also, as some samples were not perfectly flat the initial angle ($\alpha_o$) is measured. The strain at each step is calculated using the following equations:

$$\varepsilon_m = \frac{\alpha_0 - \alpha_m}{360} \cdot 100; \ \varepsilon_u = \frac{\alpha_0 - \alpha_u}{360} \cdot 100; \ \varepsilon_p = \frac{|\alpha_0 - \alpha_p|}{360} \cdot 100$$

Where $\alpha_o$ is the initial angle, $\alpha_m$ is the angle at which the sample is deformed, $\alpha_u$ is the angle after the sample has fixed the temporary shape, $\alpha_p$ is the angle after the shape recovery, $\varepsilon_m$ is the strain at which the sample is deformed, $\varepsilon_u$ is the strain after the sample has fixed the temporary shape and $\varepsilon_p$ is the strain after the shape recovery. The shape recovery ratio ($R_r$) and the shape fixity ratio ($R_f$) are the two main parameters to assess the shape memory behavior. $R_f$ and $R_r$ represent the ability of the material to fix the temporary shape and the ability to recover the original shape, respectively. The $R_r$ and $R_f$ are calculated using the following equations:

$$R_f = \frac{\varepsilon_u}{\varepsilon_m} \cdot 100; \ R_r = \frac{\varepsilon_m - \varepsilon_p}{\varepsilon_m} \cdot 100$$

| | SH:NCO: acrylate equivalent ratio | $\alpha_0(°)$ | $\alpha_m(°)$ | $\varepsilon_m$ (%) | $\alpha_u(°)$ | $\varepsilon_u$ (%) | $\alpha_p(°)$ | $\varepsilon_p$ (%) | $R_f$ (%) | $R_r$ (%) |
|---|---|---|---|---|---|---|---|---|---|---|
| Comp. Ex. 4 | 1.0:1.0:0.0 | 170.1 | 135.0 | 9.8 | 148.8 | 5.9 | 171.6 | 0.4 | 60.7 | 95.7 |
| Ex. 8 | 1.0:0.9:0.1 | 177.0 | 135.0 | 11.7 | 135.0 | 11.7 | 176.5 | 0.1 | 100.0 | 98.8 |
| Ex. 9 | 1.0:0.8:0.2 | 177.1 | 135.1 | 11.7 | 135.1 | 11.7 | 172.6 | 1.3 | 100.0 | 89.3 |
| Ex. 10 | 1.0:0.7:0.3 | 177.5 | 135.1 | 11.8 | 136.2 | 11.5 | 172.2 | 1.5 | 97.4 | 87.5 |

As seen in the table, the addition of a third compound, in this case an aliphatic diacrylate, improves the shape memory properties. Specifically, there is a huge increase on the ability to fix the temporary shape from 60% (comparative example 4) to >97% for examples 8-10. As the acrylate ratio is increased, the recovery ratio decreases but it is still close to 90% which is ideal for shape memory applications.

**Example 11**

The SH : NCO : methacrylate equivalent ratio was set at 1.0 : 0.8 : 0.2. 39.9 g of tris(6-isocyanatohexyl)-1,3,5-triazinane-2,4,6-trione (Desmodur® N3600) are added to a mixture of 34.18 g of pentaerythritol tetra(3-mercaptopropionate) (Thiocure® PETMP) and 5.41 g ethylene glycol methacrylate (SR206). The mixture is mixed for 1 minute at 3500 rpm. To this mixture, 0.47 g (0,6wt%) of 1-(anthracen-9-ylmethyl)-9-ethyl-3,4,6,7,8,9-hexahydro-2H-pyrimido[1,2-a]pyrimidin-1-ium tetraphenyl borate (EtGUA-Ant-BPh$_4$) are added and mixed for 1 minute at 3500 rpm. The formulation was degassed under vacuum if there were bubbles present.
This formulation is used to prepare a 3D article using a SLA printer from Peopoly (Moai). The printer has a 405 nm wavelength light laser with a power of 150 mW. Printing was carried out with slice thickness of 0.1 mm. As an example, we printed a column shown in Figure 2.

**Claims**

1.   A photo-curable composition comprising or consisting of

   A) at least one polythiol having at least two thiol groups;
   B) at least one polyisocyanate having at least two isocyanate groups;
   C) at least one (poly-)ene compound having at least one -C=C group;
   D) at least one photolatent base catalyst; and
   E) optionally at least one additive.

2.   The photo-curable composition according to claim 1, wherein the at least one polythiol

i) has two to six thiol groups; and/or

ii) is selected from primary and secondary aliphatic and oligomeric thiols having a molecular weight up to 5,000 g/mol; and/or

iii) is selected from di-pentaerythritol tetra(3-mercapto-propionate), pentaerythritol tetra(3-mercaptopropionate), trimethylol-propane tris(3-mercaptopropionate), glycol di(3-mercaptopropionate), pentaerythritol tetramercaptoacetate, trimethylol-propane trimercaptoacetate, glycol dimercaptoacetate, ethoxylated trimethylolpropane tri(3-mercaptopropionate), propylene glycol-2,4,6-triallyloxy-1,3,5-triazine 3-mercaptopropionate, tris[2-(3-mercaptopropionyloxy)ethyl]isocyanurate, polycaprolactone tetra 3-mercaptopropionate, pentaerythritol tetrakis(3-mercaptobutylate), 1,4-bis(3-mercaptobutylyloxy)butane, 1,3,5-tris(3-mercaptobutyloxethyl)-1,3,5-triazine-2,4,6(IH,3H,5H)-trione, trimethylolpropane tris(3-mercarptobutyrate) or mixtures thereof.

3. The photo-curable composition according to claim 1 or 2, wherein the at least one polyisocyanate

   i) has two to six isocyanate groups; and/or

   ii) has a number average molecular weight of 500 to 25,000 g/mol; and/or

   iii) comprises 1,3,5-tris(6-isocyanatohexyl)-1,3,5-triazinane-2,4,6-trione, (E)-3,5-bis(6-isocyanatohexyl)-6-((6-isocyanatohexyl)imino)-1,3,5-oxadiazinane-2,4-dione or a mixture thereof.

4. The photo-curable composition according to any of the preceding claims, wherein the at least one (poly-)ene compound

   i) has one to six -C=C groups; and/or

   ii) is a (meth)acrylic compound with a molecular weight of up to 10,000 g/mol; and/or

   iii) is selected from isobornyl acrylate, 2-phenoxyethyl acrylate, 2,4,6-tribromophenyl acrylate, 1,6-hexanediol diacrylate, 1,10-decanediol diacrylate, 3-methyl-1,5-pentanediol diacrylate, tricyclodecanedimethanol diacrylate, trimethylolpropane triacrylate, pentaerythritol tetraacrylate, dipropylene glycol diacrylate, ethoxylated bisphenol acrylate A diacrylate, ethoxylated hexanediol diacrylate, polyethylene glycol diacrylate, propoxylated neopentyl glycol diacrylate, urethane-, thiourethane-, epoxy- and polyester-end-capped acrylate oligomers, 2,4,6-tribromophenyl acrylate, isobornyl methacrylate, tetrahydrofurfuryl methacrylate, 2-phenoxyethyl methacrylate, ethylene glycol dimethacrylate, 1,4-butanediol dimethacrylate, 1,6-hexanediol dimethacrylate, ethoxylated bisphenol A dimethacrylate, tricyclodecanedimethanol dimethacrylate, trimethylolpropane trimethacrylate or mixtures thereof; or

   iv) is a vinyl compound with a molecular weight of up to 10,000 g/mol; and/or

   v) is selected from aliphatic and aromatic vinyl compounds; or

   vi) is an allyl compound with a molecular weight of up to 10,000 g/mol; and/or

   vii) is selected from aliphatic and aromatic allyl compounds.

5. The photo-curable composition according to any of the preceding claims, wherein thiol groups : NCO groups : -C=C groups are present in an equivalent ratio of 0.7 : 0.05 : 1.3 to 1.3 : 1.3 : 0.05.

6. The photo-curable composition according to any of the preceding claims, wherein the at least one photolatent base catalyst

   i) is present in 0.01 to 5 wt.-%, based on the total weight of the composition; and/or

   ii) the at least one photolatent base catalyst is selected from 1,8-diazabicyclo[5.4.0]undec-7-ene-anthracene-tetraphenyl borate, 1,5,7-triazabicyclo[4.4.0]dec-5-ene hydrogen tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 1-(anthracen-9-ylmethyl)-2,3,4,6,7,8,9,10-octahydropyrimido[1,2-a]azepin-1-ium tetraphenyl borate, 1-(anthracen-9-ylmethyl)-9-ethyl-3,4,6,7,8,9-hexahydro-2H-pyrimido[1,2-a]pyrimidin-1-ium tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 2,3,4,6,7,8-hexahydropyrrolo[1,2-a]pyrimidin-1-ium tetraphenylborate, 1-(anthracen-9-ylmethyl)-2,3,4,6,7,8-hexahydropyrrolo[1,2-a]pyrimidin-1-ium tetraphenylborate, 3-(anthracen-9-ylmethyl)-1-methyl-1H-imidazol-3-ium tetraphenylborate, 3,4,6,7,8,9-hexahydro-2H-pyrimido[1,2-a]pyrimidin-1-ium tetraphenylborate, 1,2-dicyclohexyl-4,4,5,5-tetramethylbiguanidium n-butyltriphenylborate, (Z)-([Bis(dimethylamino)methylidene]amino)-N-cyclohexyl(cyclohexylamino)methaniminiumtetrakis(3-fluorophenyl)borate or mixtures thereof; and/or

   iii) the photolatent base catalyst releases a basic component, of which its protonated counterpart has a pKa of above 10.

7. The photo-curable composition according to any of the preceding claims, wherein the at least one additive

    i) is present in up to 10 wt.-%, based on the total weight of the composition; and/or
    ii) comprises (E1) at least one inhibitor selected from acid boric esters or phosphoric acid esters; and/or
    iii) comprises (E2) at least one compound selected from solvents, fillers, fire retardants, UV-stabilizer, pigments, dyes or mixtures thereof; and/or
    iv) comprises (E3) at least one radical photoinitiator; and/or
    v) comprises (E4) at least one sensitizer.

8. The photo-curable composition according to any of the preceding claims, wherein the composition has a viscosity of 1 to 5,000 m*Pas measured with a AR2000 rheometer from TA instruments equipped with a Peltier plate and a 40mm parallel plate at 25°C in the shear stress range of 100 to 500 Pa.

9. A method of photo-curing the photo-curable composition according to any of claims 1 to 8, comprising or consisting of the steps:

    i) providing the photo-curable composition by

        i.a) mixing the components A) to D) and optionally E) or
        i.b) mixing A), D) and optionally E) and separately mixing B) and C) before mixing the mixture containing A), D) and optionally E) and the mixture containing B) and C);

    ii) transferring the photo-curable composition of step i) to a mould;
    iii) exposing the photo-curable composition to UV-light to obtain a cross-linked polymer; and
    iv) optionally post-curing the obtained polymer by thermal or UV treatment.

10. A method of three dimensional printing an object with the photo-curable composition according to any of claims 1 to 8, comprising or consisting of the steps:

    i) providing the photo-curable composition;
    ii) forming a layer of the photo-curable composition with a three dimensional printer;
    iii) exposing the layer under a suitable light source following a pattern of cross-sectional layer of the model to cure the layer;
    iv) providing a further layer of the photo-curable composition with the three dimensional printer upon the cured layer obtained after step iii);
    v) exposing the layer of step iv) under a suitable light source following a pattern of cross-sectional layer of the model in order to cure the layer and bond with the layer of step iii); and
    vi) optionally repeating steps iv) and v) until the three-dimensional object is obtained.

11. A cross-linked polymer obtained by the method according to claim 9.

12. A three-dimensional object obtained by the method according to claim 10.

13. The cross-linked polymer according to claim 11 or the three-dimensional object according to clam 12, having

    i) a glass transition temperature Tg of 0 to 200 °C, measured according to ISO 11357-2:2014-07 or ASTM E1356-08(2014); and/or
    ii) a refractive index of 1.50 to 1.80, measured with an Electronic Abbe Refractometer AR 2008 from A.Krüss Optronic at 21°C and at standard wavelength of 589 nm.

14. Use of the cross-linked polymer according to claim 11 or 13 or the three-dimensional object according to claim 12 or 13 as antireflective coating, encapsulant for LEDs, microlense for CMOS image sensors, as optical material, as biomedical functional coating, packaging and textile, stents, scaffolds, dental applications, and as reversible adhesive for debond on demand applications.

Fig. 1

Fig. 2

Europäisches
Patentamt

European
Patent Office

Office européen
des brevets

# EUROPEAN SEARCH REPORT

Application Number

EP 19 38 2755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 444 316 A1 (HENKEL AG & CO KGAA [DE]) 20 February 2019 (2019-02-20) * page 12;17, paragraphs 90-91;126,128 - pages 23-24; claims 10,12-14; example 14 * | 1-4,6,7, 9,11,14 | INV. C08G18/04 B33Y70/00 B33Y80/00 C08G18/38 |
| X | EP 3 504 251 A1 (UNIV COLORADO REGENTS [US]) 3 July 2019 (2019-07-03) * page 46, lines 1-5 - pages 81-93; claims 1, 3, 4, 5, 43 * | 1-14 | C08G18/67 C08G18/79 |

**TECHNICAL FIELDS SEARCHED (IPC)**

C08G
B33Y

The present search report has been drawn up for all claims

| Place of search | Date of completion of the search | Examiner |
|---|---|---|
| Munich | 21 February 2020 | Stefaniu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 789 416 A1**

**ANNEX TO THE EUROPEAN SEARCH REPORT
ON EUROPEAN PATENT APPLICATION NO.**

EP 19 38 2755

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2020

| Patent document cited in search report | | Publication date | Patent family member(s) | | Publication date |
|---|---|---|---|---|---|
| EP 3444316 | A1 | 20-02-2019 | EP | 3444316 A1 | 20-02-2019 |
| | | | TW | 201910487 A | 16-03-2019 |
| | | | WO | 2019034335 A1 | 21-02-2019 |
| EP 3504251 | A1 | 03-07-2019 | EP | 3504251 A1 | 03-07-2019 |
| | | | WO | 2018039331 A1 | 01-03-2018 |

EPO FORM P0459

For more details about this annex : see Official Journal of the European Patent Office, No. 12/82